# EUROPEAN PATENT SPECIFICATION

(11) **EP 0 796 231 B1**
(45) Date of publication and mention of the grant of the patent: **06.05.1999**
(21) Application number: 94929569.5
(22) Date of filing: 18.10.1994
(51) Int. Cl.: C05F 17/00, C05F 17/02

(54) **METHOD AND APPARATUS FOR COMPOSTING WASTES**
VERFAHREN UND VORRICHTUNG ZUR KOMPOSTIERUNG VON ABFÄLLEN
PROCEDE ET APPAREIL DE TRANSFORMATION DE DECHETS EN COMPOST

(43) Date of publication of application: 24.09.1997
(73) Proprietor: Puutarhafani OY, 36201 Kangasala (FI)
(72) Inventor: Puutarhafani OY, 36201 Kangasala (FI)
(74) Representative: Nieminen, Taisto Tapani
(86) International application number: FI9400467
(87) International publication number: WO9611892

(56) References cited:
- EP-A- 0 253 481
- US-A- 2 285 834

## Description

The invention relates to a method and apparatus for treatment of organic waste and applicable, as a small unit, to composting of household waste of residential blocks and, as a larger unit, to cetralized composting of all kinds of institutional household waste, refinery, agricultural and industrial waste.

In composting organic waste moulders microbiologically. Generally, decomposition of waste in the nature advances slowly on the ground in ambient temperatures. Beside microbes and fungi, also more advanced organisms, such as dung worms, springtails, mites and beetles are engaged in the process. The process is called ground composting. A sufficient heap of waste heats up, i.e. "burns" rapidly in varying temperatures. Due to high temperature, more advanced organisms cannot be engaged in the process. The process is called hot composting. In hot composting the temperature can rise up even to +80 °C. This so called thermophile stage takes a few weeks, whereafter the temperature of the mass falls slowly within two months to the level of the ambient temperature. This slow composting procedure is called after-curing, whereby, for instance, substances hazardous to plants disappear from the compost mass. Organisms thriving in low temperatures are reproducing in the process of after-curing, which means that the process is most similar to ground composting. Presently known applications of hot composting are, for instance, composting in a container, a heap and a drum.

Known composting methods and devices have several disadvantages. The greatest disadvantage by composting in a container is the heavy mingling of waste mass by hand and shifting it over to a device of after-composting. By heap composting, the turning and mingling of the waste mass is unefficient and energy consuming. Loss of temperature due to rain, wind and cold, multiplies the duration of process compared to closed conditions. Further, heap composting causes a number of environmental disadvantages, a.o. waste water runoffs, noxiuous animals, odours and mildew dust spreading out in the environment when waste mass is turned by a machine. With regard to their capacity, hihg-efficiency drum composting devices are expensive, and inspite of the disadvantages, large quantities of waste are treated mainly in heaps.

According to the method and appartus of this invention a crucial improvement of the above presented disadvantages is reached. In order to realize it, the inventional method and apparatus are characterized in what is presented in the featuring part of patent claims 1 and 5.

The invention presents several advantages compared to present methods and devices. The mass is is turned totally, since by every turn the most tihgtly packed waste mass from the bottom will stay on top. At the same time the mass can be controlled and blend components can be added upon need. The turning scoops have a tight bottom and thus seep water cannot pollute the soil. Arranging the scoops in the same thermally insulated space, the mass of the first scoop also heats up the masses in after-curing. Later on, the size, i.e. the capacity of a scoop composting device can be easily enlargened by mounting sequential scoops. In manually driven composting scoop devices heavy manual jobs, such as turning, mingling and shifting the waste mass over to after-curing are avoided. Used on farms, a scoop composting device replaces the costly dry or liquid manure pit. A scoop composting device needs no electricity, since all jobs are carried out with a tractor. This is an advantage increasing the operational safety. A scoop composting device is more simple and cheaper than for instance a drum composting device of same capacity. A scoop composting device is more safe to operate mecahnically, since it has no roll conveyr or similar devices made of parts easily broken by foreign particles. A scoop composting device can be placed on the ground and so no expensive field for the composting device is needed. Furthermore, the process can be easily automated upon need. The unrestricted size and extendability of the scoop composting device enables so called decentralized composting, whereby it can be utilized for a residential block, a village, a municipality or a quarter of a town. By means of this solution the disadvantages of large composting plants, as for instance long transportation routes of waste and mould and environmental hazards caused thereby, are avoided. The invention can also be applied to compost toilets.

In the following the invention is disclosed with reference to the enclosed drawings, where
- Fig. 1: is a schematic sectional side view of the composting device
- Fig. 2: is a schematic view of the composting device from above.
- Fig. 3: is a schematic view of the composting device from the end of the scoop line.
- Fig. 4: is a schematic sectional side view of a household waste composting device in a residential block.
- Fig. 5: is a schematic side view of a composting device on a farm.
- Fig. 6: is a schematic view from the filling end of the composting device on a farm.

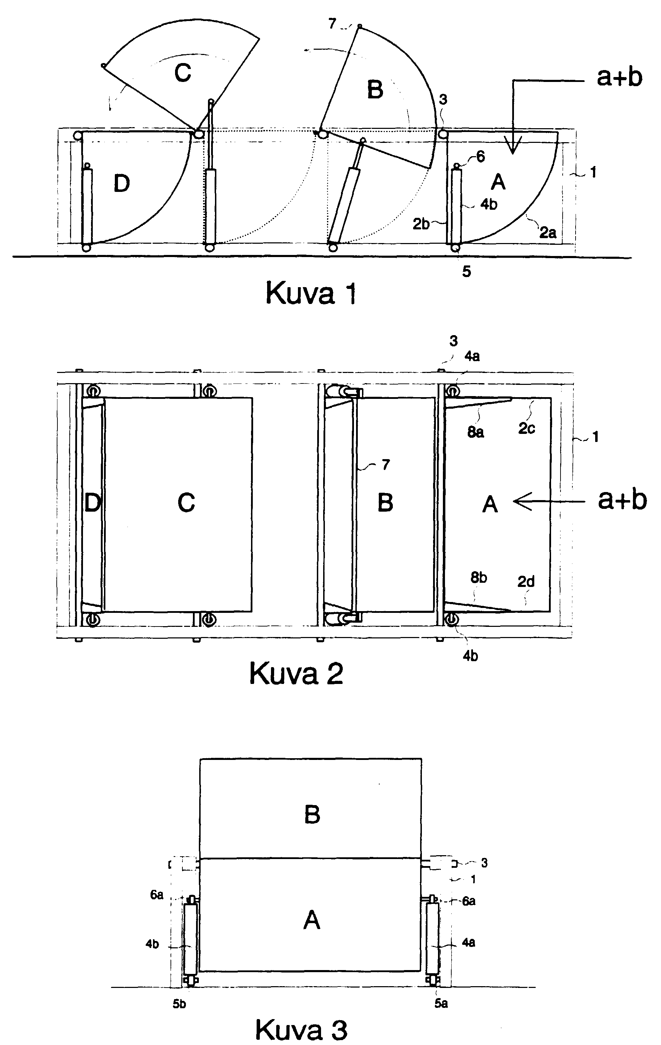

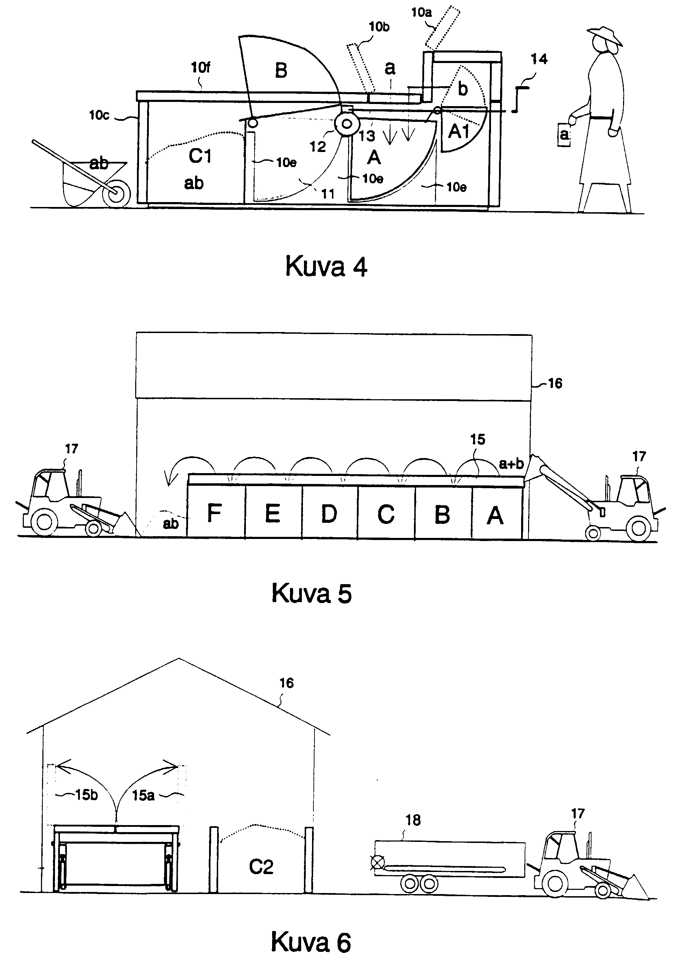

Figure 1 shows a schematic and sectional side view the essential constructions of the composting device. Frame 1 of the composting device is made, for instance, of steel beams. The scoop (A,B...) has a front plate 2a, a rear plate 2b, and end plates 2c and 2d. Scoop filling and emptying from the upper side, that's why the scoop top is open. An axle 3 is fastened with bearings to the upper part of rear plate 2b. The scoops of the composting device are placed near each other and turn at least 90 °C mechanically on their axle. Pre-mingling of waste a and blend components b must not be thorough, since the masses are also mingled by every swinging motion of the scoop. The scoops (A,B...) in figure 1 are turned by hydraulic lifters 4a and 4b. The lifters are fastened by joints 5 from their lower ends to frame 1, and by joints 6 from their upper ends to end plates 2c and 2d. The scoops are not turned quite up by the lifters and therefore the glutinous mass can stick to rear plate 2b. For instance, a vibrator can be used as auxiliary means. The compostable and mingled waste mass (a+b) is shifted over to the first scoop A in the scoop line. The waste mass burns most intensively in the first scoop and cures in cooled state in the next ones. In the process of composting, mass (a+b) is shifted from the front end scoops (A,B...) to the rear end scoops (C,D...) in succession from the former to the next one by means of the swinging motion. When a scoops turns, the waste mass rolls into the next scoop becoming at least partly mingled. The mass is turned totally, since the mass from the scoop bottom stay on top. This procedure is repeated by each turn of the scoop and, accordingly, the tightly packed undermost mass becomes thorougly aerated. Shifting over from one scoop to another takes place with different intervals, which are disclosed in the presented embodiments. The mass quantity is reduced by 50-80% while the process advances, but it is not worth while to produce scoops of different sizes. The scoops are kept full by intermediate turnings. In an active process the turning of scoops is started from the last scoop by removing the oldest mass (mold) ab. E.g., in figure 1 it is the scoop D. The turning advances in succession to scoop A. Finally, the empty scoop A can be filled with new pre-mingled mass (a+b) of waste (a) and blend component (b). Figure 1 shows the different positions of scoop turnings. Scoops A and D are turned to their basic, i.e. filling position. A packing 7 prevents the mass from flowing in between the scoops, figure 1 and 2. Packing 7 is, for instance, made of flexible rubber fastened to the upper edge of plate 2a. It is pressed against axle 3 with the scoop in its lower position. Plates 8a and 8b prevent the mass from flowing over the edges of the next scoop, figure 2. The process of composting is controlled and regulated on turning the scoops. For instance, water is added to a too dry mass or a dry blend component to a too wet mass. By round-the-year use the composting device with scoops must be thermally insulated. Industrial heat insulations can be used for this purpose. Generally, it is of no use to insulate the bottom of the composting device, because of small thermal loss. Heat insulations are not illustrated in figures 1, 2 and 3.

Figure 4 shows a composting scoop device for treatment of food waste with two turning scoops of ab. 500 liters according to the invention. The scoop size cannot be significantly bigger, since the height and width of the composting device must within the reaches of the user. However, the limited size of scoops is not a disadvantage, since the number of scoops can be increased upon need. Scoops A and B are turned rotating gearwheel 12 by means of rod 13 and crank handle 14. For the sake of simplicity, the turning mehanism of scoop B is not illustrated. The composting device has a lid 10a of blend component scoop Al, a waste filling lid 10b, a mold outlet lid 10c and a service lid 10d. The scoops are thermally insulated from the underside with stiff insulation 10e, as are the lids, too. On turning the scoop up, it rises from space 11 in insulations 10e. The scoop returns to space 11 on turning it down. Insulation 10e maintains, also in wintertime, the temperature needed in the process. In mold store C1 the mass is after-curing and does not freeze even in winter-time. Lid 10f is fixed with on-off bolts to the frame and lifted off before the use of scoops. As to its construction, the blend component scoop Al is according to the invention. The construction facilitates addition of blend component b, since it can be, for instance, dropped by hand onto waste a dropped into scoop A. The blend component scoop Al is turned up by crank handle 14, when the level of blend component (b) has sunken. The composting device illustrated in figure 4 can handle waste from a residential building of 30-40 families.

Figures 5 and 6 show a composting scoop device designed to handle the manure of a farm and comprising 6 turning scoops as per this invention. The composting device is, for instance, placed in a barn 16. Manure moulders in the composting device in ab. 6 weeks, but needs at least 2 months for discharge of hazardous agents from after-curing. On one side of the barn a mold stack C2 has been made for mold after-curing. The covering elements are divided into two parts 15a and 15b, which are lifted up before turning the containers, for instance with hydraulic jacks. Manure a and blend component b can be pre-mingled, for instance with manure spreaders 18. Scoop A is filled by a scoop tractor 17 and the mould is shifted over to stack C2. The hydraulic system of the tractor is also used for turning the scoops.

Attention must be paid especially to the fact that a composting scoop device can be built always as big as needed. As a large unit it is applicable, beside the presented embodiments, also to centralized composting of community waste, for instance on dumping grounds. Present ways of composting require a large stack field or an expensive composting drum device. It is also worth using a composting scoop device as well as composting drum device only for hygienization, i.e. the residence time is about a week. Then the mass can be stacked for after-curing, since the need of oxygen and, accordingly, also of turning is small. In small places it is worth making the composting scoop device manually operated, but in large places the functions can be mechanized and automated. Technology already known can be utilized by pre-treatment of waste and blend components and by mold sifting.

Placing the composting scoop device into a warm greenhouse makes it possible to utilize heat, carbon dioxine and mold produced by composting. In addition, the space protects the composting process against rain and wind and noxius animals. Anyway, it may be stated that the invention is not restricted to the embodiments presented in the descriptions and drawings but can be modified within the limits of the enclosed patent claims.

## Claims

1. A method to compost waste, where pre-mingled waste masses (a+b) are composted in special containers, where advantageous conditions for composting are maintained, characterized in that the containers are scoop formed, whereby the pre-mingled waste mass (a+b) is shifted over to the first scoop A in the line of scoops and the mass (a+b) is shifted over during the composting process from the front end scoops (A,B...) to the rear end scoops (C,D...) in succession from the former scoop during next swivel motion of the scoops.

2. A method according to patent claim 1, **characterized in** that
- scoops are added upon need.

3. A method according to patent claim 1, **characterized in** that
- the composting process is controlled and regulated while the scoops are turned.

4. A method according to any of the above patent claims 1 - 3 **characterized in** that
- a covered and thermally insulated line of scoops is used.

5. An apparatus to realize the method according to patent claim 1, **characterized in** that the apparatus comprises
- scoops (A,B...) close to each other in a line turning at least 90° on their axle (3), whereat each scoop is furnished with a turning mechanism (4a,4b,12,13,14) for emptying the scoop into the next scoop.

6. An apparatus according to patent claim 5 **characterized in that**
- the scoop line is covered and thermally insulated.

## Patentansprüche

1. Ein Verfahren zur Abfallkompostierung, wo vorgemischte Abfallmassen (a+b) in Sonderbehältern kompostiert werden, in denen vorteilhafte Zustände aufrechterhalten werden, gekennzeichnet dadurch, dass die Behälter (6) Kellenförmig sind, wobei die vorgemischte Abfallmasse (a+b) bei dem Kompostierungsprozess von Kellen (A,B...) im Vorderende in Kellen (C,D...) im Hinterende, der Reihe nach von der vorderen zu der nächsten Kelle, bei jeder Schwenkung verschoben wird.

2. Ein Verfahren gemäss Patentanspruch 1 gekennzeichnet dadurch, dass
- die Anzahl der Kellen bei Bedarf vermehrt werden kann.

3. Ein Verfahren gemäss Patentanspruch 1 gekennzeichnet dadurch, dass
- der Kompostierungsprozess beim Schwenken der Kellen kontrolliert und geregelt wird.

4. Ein Verfahren gemäss einem der Patentansprüche 1 - 3 gekennzeichnet dadurch, dass
- eine bedeckte und wärmeisolierte Kellenreihe verwendet wird.

5. Eine Vorrichtung zur Realisierung des Verfahrens gemäss Patentanspruch 1, gekennzeichnet dadurch, dass die Vorrichtung besteht aus
- um ihre Achse (3) wenigstens 90° scwenkende, nahe aneinderliegenden Kellen (A,B...), wobei jeder Kelle mit einem Schwenkmechanismus (4a,4b,12,13,14) zur Entleerung der Kelle in die nächste Kelle versehen ist.

6. Eine Vorrichtung gemäss Patentanspruch 5 gekennzeichnet dadurch, dass
- die Kübelreihe bedeckt und wärmeisoliert ist.

## Revendications

1. Une méthode pour fermenter des débris, selon laquelle des masses de débris prémélangées (a+b) sont fermentées dans des conteneurs spéciaux maintenant les conditions de fermentation les plus avantageuses, caractérisée en ce que les conteneurs ont la forme d'une pelle, ce qui permet de transférer d'abord la masse prémélangée (a+b) dans la première pelle A de la ligne de pelles et ensuite, pendant le processus de fermention, de transférer cette masse (a+b), des premières pelles (A, B...) dans les dernières pelles (C, D...), en avançant d'une pelle à la suivante au moyen du mouvement pivotant des pelles.

2. Une méthode selon la revendication 1, caractérisée en ce que
- le nombre de pelles est aggrandi selon le besoin.

3. Une méthode selon la revendication 1, caractérisée en ce que
- le processus de fermentation est contrôlé et régulé pendant le pivotement des pelles.

4. Une méthode selon l'une quelconque des revendications 1 à 3, caractérisée en ce que
- la ligne de pelles est couverte et thermiquement isolée.

5. Un appareil pour réaliser la méthode selon la revendication 1, caractérisé en ce que l'appareil comprend
- les pelles (A, B...), l'une proche de l'autre dans une ligne et pivotant au moins de 90° sur leurs axes (3), chaque pelle étant munie d'un mécanisme de pivotement (4a, 4b, 12,13, 14) permettant de la vider dans la pelle suivante.

6. Un appareil selon la revendication 5, caractérisé en ce que
- la ligne de pelles est couverte et thermiquement isolée.
